Europäisches Patentamt

European Patent Office

Office européen des brevets

(11) Publication number: **0 374 973**
**A2**

## (12) EUROPEAN PATENT APPLICATION

(21) Application number: **89124014.5**

(22) Date of filing: **27.12.89**

(51) Int. Cl.⁵: **B60R 22/26**

(30) Priority: **23.12.88 IT 5364188 U**

(43) Date of publication of application:
**27.06.90 Bulletin 90/26**

(84) Designated Contracting States:
**DE ES FR GB SE**

(71) Applicant: **FERRARI S.P.A. ESERCIZIO FABBRICHE AUTOMOBILI E CORSE**
**Via Emilia Est, 1163**
**I-41100 Modena(IT)**

(72) Inventor: **Barbiero, Roberto**
**Via Crespellani, 13 I-41043 Formegine Frazione Casinalbo(IT)**

(74) Representative: **Boggio, Luigi et al**
**STUDIO TORTA Società Semplice Via Viotti, 9**
**I-10121 Torino(IT)**

(54) **Motor vehicle seat fitted with a seat belt.**

(57) A seat comprising an eyelet (1) secured to the top (2) of the seatback, on one side of the seat; first connecting means (4) for securing a first end (5) of the seat belt (6) in a predetermined position in relation to the vehicle body; and second connecting means (7) for securing the second end of the belt (6) in a predetermined position in relation to the vehicle body; which belt (6) slides through the eyelet (1), and presents a buckle (9) connected to and sliding in relation to the belt (6), and designed, when the belt (6) is in use, to engage third connecting means (10) secured to the vehicle body.

Fig.1

EP 0 374 973 A2

## MOTOR VEHICLE SEAT FITTED WITH A SEAT BELT

The present invention relates to a motor vehicle seat fitted with a seat belt and designed to provide both maximum driving comfort and effective protection of the occupant in the event of collision.

Known motor vehicle seat belts are connected, at one end, to a connecting member, usually a bracket, secured to the top of a pillar on the vehicle body, and, at the other end, to a second connecting member secured to the bottom of the pillar. Said second connecting member is usually provided with a winding member for automatically winding part of the seat belt when not in use. The seat belt itself in provided with a buckle connected to and sliding in relation to the belt, and which, when the belt is in use, is connected to a third connecting member secured to the central portion of the bodywork. When in use, therefore, a first portion of the belt extending substantially between said second and third connecting members fits substantially over the pelvic region of the occupant, whereas a second portion extending between said first and third connecting members fits over the upper torso.

Known seat belts of the aforementioned type present a number of drawbacks.

Firstly, in addition to being uncomfortable, belts of this type fail to provide for effective protection of the occupant in the event of collision, by virtue of said second portion of the belt over the upper torso presenting a substantially straightline configuration which does not provide for firmly restraining the uppermost part of the torso.

Moreover, assembly of the belt to vehicle body involves a good deal of time and effort, on account of the limited access available for fitting said connecting members as required to the body.

Finally, when not in use, the belt remains to the side of the seat, in such a position as to impede the freedom of movement of the occupant inside or when getting in and out of the passenger compartment.

The aim of the present invention is to provide a motor vehicle seat fitted with a seat belt and designed to overcome the above drawbacks.

With this aim in view, according to the present invention, there is provided a motor vehicle seat fitted with a seat belt and characterised by the fact that it comprises:

an eyelet secured to the top of the seatback, on one side of the seat;

first connecting means for securing a first end of said belt in a predetermined position in relation to the vehicle body;

second connecting means for securing the second end of said belt in a predetermined position in relation to the vehicle body;

said belt sliding through said eyelet and having a buckle connected to and sliding in relation to said belt, and designed, when said belt is in use, to engage third connecting means for securing said buckle in a predetermined position in relation to the vehicle body.

The invention will be described by way of example with reference to the accompanying drawings, in which:

Fig.1 shows a front view in perspective of the seat according to the present invention, and with the seat belt in the rest position;

Fig.2 shows a partial front view of the seatback on the seat according to the present invention;

Fig.s 3 and 4 show partial opposite side views of the seat according to the present invention;

Fig.5 shows a further front view in perspective of the seat according to the present invention, but with the seat belt in the operative position;

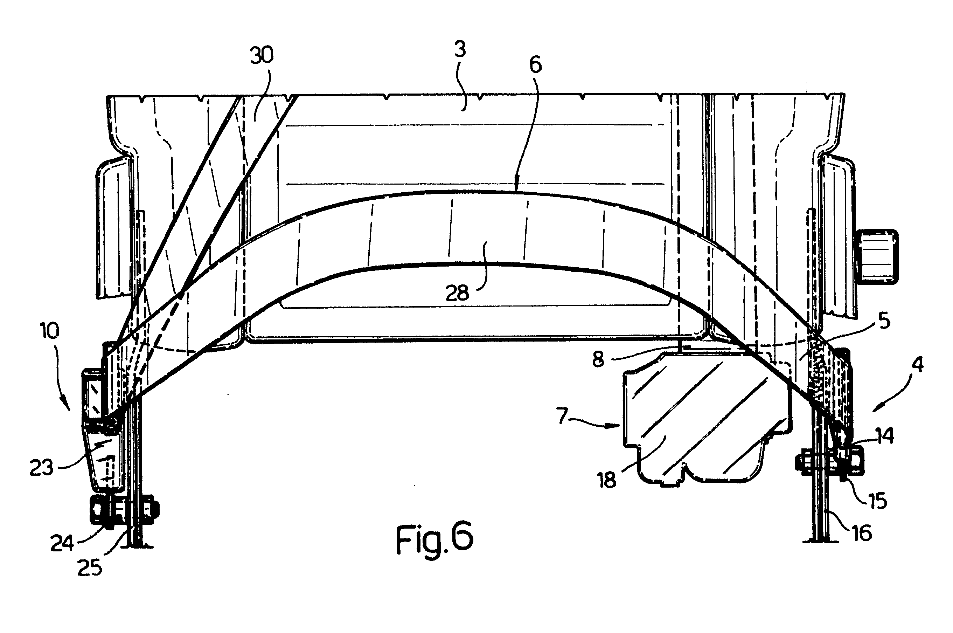

Fig.6 shows a partial front view of the seat according to the present invention, with the seat portion omitted for the sake of simplicity.

The seat according to the present invention substantially comprises an eyelet 1 secured to the top 2 of seatback 3, on one side of the seat, as shown in

Fig.s 1, 2 and 5; first connecting means 4 for securing a first end 5 of belt 6 in a fixed position in relation to the vehicle body (not shown); and second connecting means 7 for also securing the second end 8 of belt 6 in a fixed position in relation to the vehicle body. Said belt 6 slides through eyelet 1, and presents a buckle 9 connected to and sliding in relation to belt 6, and designed, when belt 6 is in use, to engage in known manner with third connecting means 10 secured to the vehicle body.

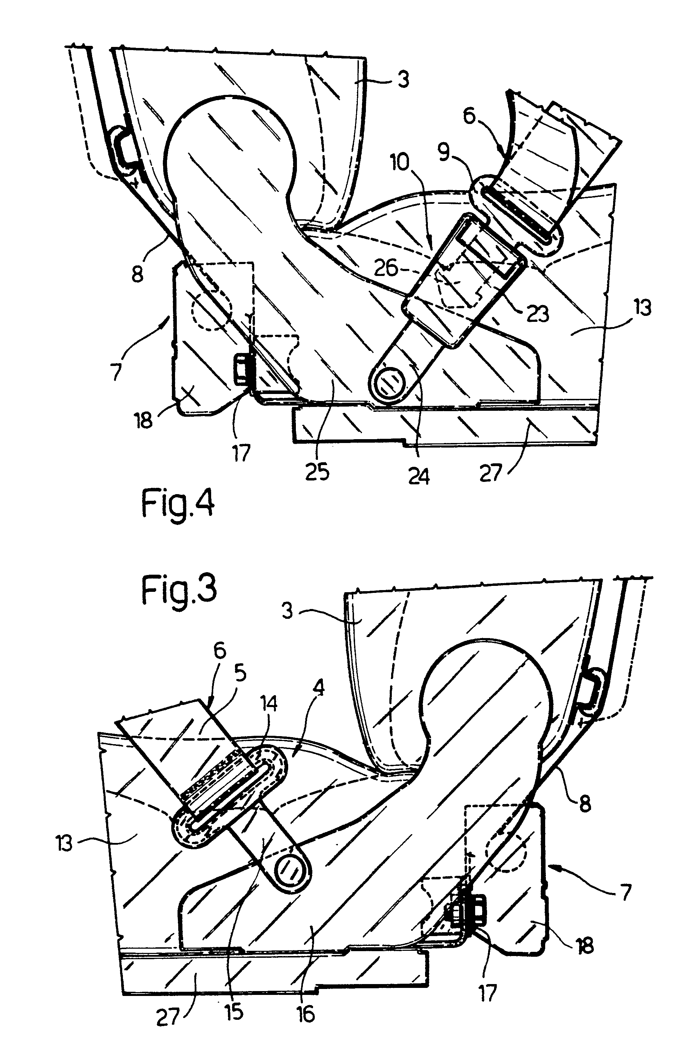

Said connecting means 4 are conveniently secured to one side of seat portion 13, and conveniently comprise an eyelet 14 to which the first end 5 of belt 6 is connected, and which is fitted by bracket 15 (Fig.3) to a plate 16 forming part of the seat supporting structure.

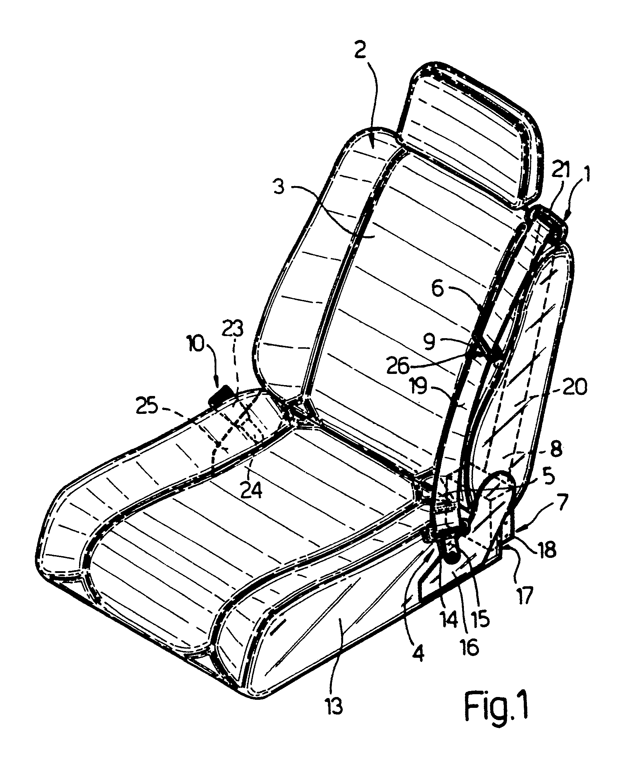

Said second connecting means 7 are also conveniently secured to seat portion 13, to rear surface 17 of the same, and comprise a known winding device 18 for partially winding belt 6 automatically. As shown clearly in Fig.1, winding device 18 is located on one side of surface 17, substantially in line with the same vertical plane as eyelet 1. Consequently, when in the idle position shown in Fig.1, belt 6 presents a first and second section 19 and 20 extending respectively over the front and rear surfaces of seatback 3.

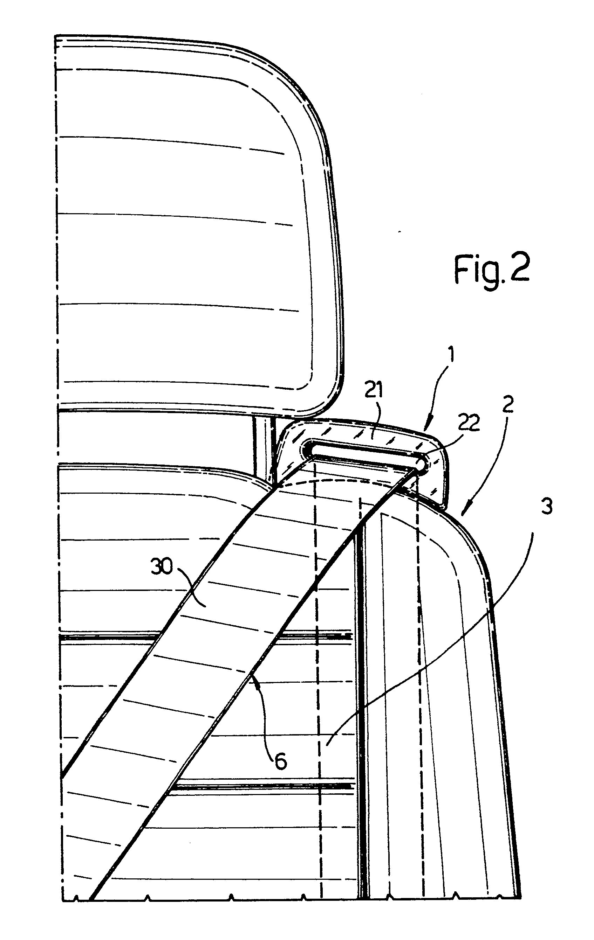

As shown clearly in Fig.2, eyelet 1 conveniently comprises a plate 21 secured to seatback 3 and in which is formed a substantially rectangular opening 22 through which belt 6 slides.

Said third connecting means (Fig.4) substantially comprise a housing 23 secured by bracket 24 to a plate 25 forming part of the seat supporting structure, and having known engagement means for locking a suitable shaped plate 26 when this is inserted inside an opening in housing 23.

The seat according to the present invention operates as follows.

The seat is first assembled on to the vehicle body in the usual way, i.e. by fitting the seat supporting structure with a pair of rails 27 (Fig.s 3, 4) mating with a second pair of rails secured to the floor panel, for enabling the seat to slide longitudinally in relation to the vehicle body. Seatback 3 may be positioned in relation to seat portion 13 using any known type of device, and either may be designed in any appropriate manner for ensuring maximum comfort of the occupant.

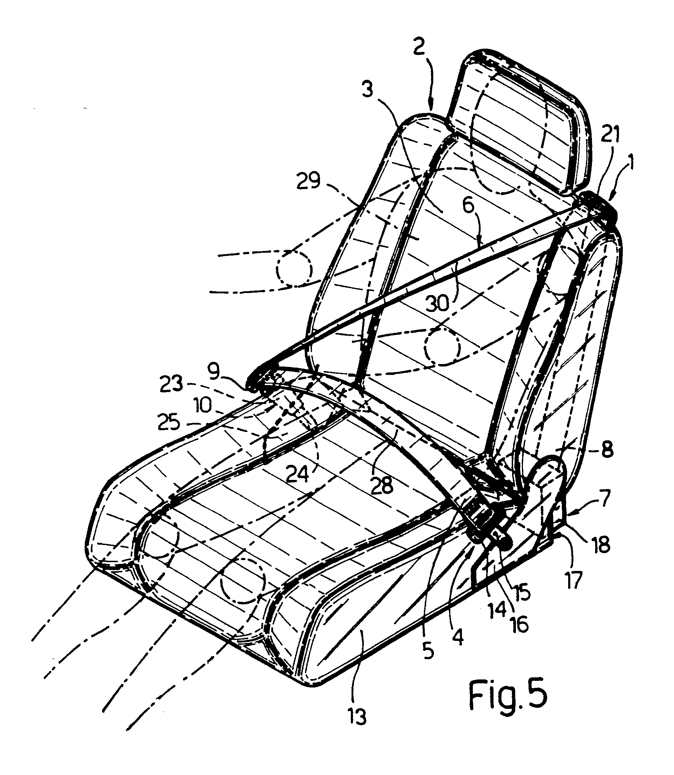

When in the idle position shown in Fig.1, part of belt 6 is wound inside winding device 18 so as to pull sections 19 and 20 firmly over the front and rear surfaces respectively of seatback 3. For securing belt 6 in the operative position, sufficient pull is exerted on buckle 9 for reeling belt 6 off winding device 18 and through eyelet 1, and so inserting plate 26 integral with belt 9 inside housing 23, as shown in Fig.s 4 and 5. This results in the formation of a belt section 28 (Fig.5) which fits substantially over the pelvic region of occupant 29, and a section 30 which fits over both the chest and shoulder. Such a configuration provides for effectively safeguarding the occupant in the event of collision, by virtue of the restraining action of the belt at eyelet 1 being substantially parallel to the traveling direction of the vehicle and therefore perpendicular to plate 22 of eyelet 1, which provides for permanently securing the belt over the chest and shoulder of the occupant. Moreover, under normal driving conditions, maximum comfort of the occupant is assured by virtue of the upper portion of section 30 fitting substantially over the shoulder, as shown in Fig.5. The belt itself may be assembled quickly and easily to the seat before this is fitted to the vehicle body.

Moreover, when in the idle position shown in Fig.1, the belt is retracted neatly so as to in no way impede the freedom of movement of the occupant inside or when getting in or out of the passenger compartment.

To those skilled in the art it will be clear that changes may be made to both the design and arrangement of the component parts of the seat as described and illustrated herein without, however, departing from the scope of the present invention.

## Claims

1) - A motor vehicle seat fitted with a seat belt (6) and characterised by the fact that it comprises: an eyelet (1) secured to the top (2) of the seatback (3), on one side of the seat; first connecting means (4) for securing a first end (5) of said belt (6) in a predetermined position in relation to the vehicle body; second connecting means (7) for securing the second end (8) of said belt (6) in a predetermined position in relation to the vehicle body; said belt (6) sliding through said eyelet (1) and having a buckle (9) connected to and sliding in relation to said belt (6), and designed, when said belt (6) is in use, to engage third connecting means (10) for securing said buckle (9) in a predetermined position in relation to the vehicle body.

2) - A seat as claimed in Claim 1, characterised by the fact that said first connecting means (4) are secured to one side of the seat portion (13) of said seat.

3) - A seat as claimed in Claim 2, characterised by the fact that said first connecting means (4) comprise an eyelet (14) to which said first end (5) of said belt (6) is connected, and which is secured to said seat portion (13).

4) - A seat as claimed in one of the foregoing Claims, characterised by the fact that said second connecting means (7) are secured to said seat portion (13) of said seat.

5) - A seat as claimed in Claim 4, characterised by the fact that said second connecting means (7) are secured to the rear surface (17) of said seat portion (13), substantially in the same vertical plane as said eyelet (1).

6) - A seat as claimed in Claim 1, characterised by the fact that said second connecting means (7) comprise a winding device (18) for automatically winding part of said belt (6).

7) - A seat as claimed in one of the foregoing Claims, characterised by the fact that said third connecting means (10) are secured to said seat portion (13), on the opposite side to that on which said first connecting means (4) are fitted.

8) - A seat as claimed in one of the foregoing Claims, characterised by the fact that said eyelet (1) comprises a plate (21) secured to said seatback (3) and in which is formed an opening (22) through which said belt (6) slides.

Fig.1

Fig. 2

Fig.4

Fig.3

Fig.5

Fig.6